# DEMANDE DE BREVET EUROPEEN

(11) **EP 4 588 641 A1**
(43) Date de publication de la demande: **23.07.2025**
(21) Numéro de dépôt: 25151766.0
(22) Date de dépôt: 14.01.2025
(51) Int. Cl.: B29C 45/00, B29C 45/76

(54) **SYSTÈME D EMBOÎTEMENT DE DEUX PIÈCES AVEC SYSTÈME DE CONTRÔLE**

(30) Priorité: 16.01.2024 FR 2400406
(71) Demandeur: ERMO, 53440 Marcille-la-Ville (FR)
(72) Inventeur: LASCOUP, Bertrand, 53440 MARCILLE-LA-VILLE (FR); DEL NEVO, Maurizio, 53440 MARCILLE-LA-VILLE (FR)
(74) Mandataire: Cabinet Le Guen Maillet

(57) **Abrégé**

L'invention concerne un système d'emboîtement (200) pour emboîter deux pièces (50a-b) et comportant une molette (202) présentant un axe de révolution (202a) et venant en appui sur la deuxième pièce (50b) pour l'emboîter sur la première pièce (50a), deux bras de levier (204a-b) mobiles en rotation autour d'un axe de rotation (206) désaxé par rapport audit axe de révolution (202a), au moins un capteur d'effort (208) fixé sur un élément du système d'emboîtement (200) et arrangé pour émettre une valeur électrique proportionnelle à la déformation subie lorsque ladite molette (202) appuie sur la deuxième pièce (50b), et une unité de contrôle (80) connectée audit au moins un capteur d'effort (208) et arrangée pour comparer la valeur électrique à un intervalle prédéfini de valeurs.

## Description

### DOMAINE TECHNIQUE

La présente invention concerne un système d'emboîtement de deux pièces comportant un système de contrôle du bon emboîtement desdites deux pièces, ainsi qu'une machine de moulage comportant un tel système d'emboîtement.

### ÉTAT DE LA TECHNIQUE ANTÉRIEURE

Un capuchon du type capuchon pour une bouteille contenant un produit liquide comme du shampoing, de l'après-shampoing, du produit vaisselle ou autres, comporte généralement un corps et un opercule. Le corps est destiné à s'emboîter sur la bouteille et l'opercule est destiné à être manoeuvré d'une position de fermeture vers une position d'ouverture et vice-versa pour permettre la retenue du produit dans la bouteille ou son écoulement hors de la bouteille.

De tels capuchons peuvent être également utilisés dans d'autres secteurs comme par exemple, l'automobile ou dans le domaine médical.

Le corps et l'opercule sont moulés ensemble et sont reliés l'un à l'autre par une charnière qui permet de déplacer l'opercule par rapport au corps.

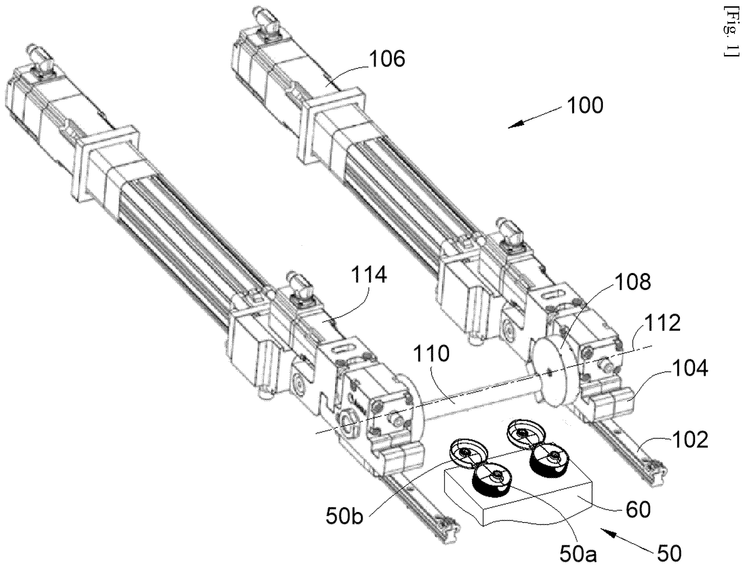

La Fig. 1 montre deux capuchons 50, où chacun comporte un corps 50a et un opercule 50b articulé sur le corps 50a.

Classiquement, le corps 50a et l'opercule 50b sont moulés dans une machine de moulage entre deux mâchoires qui présentent des évidements et des reliefs et qui viennent l'une contre l'autre pour former des cavités, où le corps 50a et l'opercule 50b seront moulés.

La Fig. 1 montre une des mâchoires 60 sur laquelle les corps 50a sont maintenus.

La Fig. 1 montre également un système d'emboîtement 100 de l'état de la technique qui assure le basculement de chaque capuchon 50b et son emboîtement sur le corps 50a associé.

Le système d'emboîtement 100 comporte deux rails de guidage 102 parallèles et pour chaque rail de guidage 102, un chariot 104 mobile en translation sur le rail de guidage 102.

Pour chaque chariot 104, le système d'emboîtement 100 comporte un premier moyen d'entraînement 106, typiquement un moteur avec une vis à billes, qui assure le déplacement en translation du chariot 104 le long du rail de guidage 102. Les deux chariots 104 sont en face l'un de l'autre et se déplacent de manière synchronisée.

Chaque chariot 104 porte un bras de levier 108, ici sous forme d'une roue, qui est monté mobile en rotation sur le chariot 104 autour d'un axe de rotation 112. Les axes des bras de levier 108 des deux chariots 104 sont coaxiaux et, pour chaque chariot 104, le système d'emboîtement 100 comporte un deuxième moyen d'entraînement 114, typiquement un moteur, qui assure le déplacement en rotation du bras de levier 108 du chariot 104.

Le système d'emboîtement 100 comporte également une barre d'emboîtement 110 qui est montée entre les deux roues 108 et de manière désaxée par rapport à l'axe de rotation 112.

Le fonctionnement du système d'emboîtement 100 est alors le suivant. Après moulage, les capuchons 50 se présentent entre les rails 102 et toujours fixés ici sur la mâchoire 60. Les chariots 104 sont déplacés en translation le long des rails 102 de manière à amener la barre d'emboîtement 110 sous les opercules 50b. Les bras de levier 108 sont déplacés en rotation de manière à faire pivoter les opercules 50b sous l'action de la barre d'emboîtement 110 et dans le même temps, les chariots 104 sont déplacés en translation le long des rails 102 pour que la barre d'emboîtement 110 appuie sur chaque opercule 50b pour l'emboîter sur le corps 50a associé.

Bien qu'un tel système d'emboîtement donne de bons résultats, il ne permet pas de vérifier le bon emboîtement de l'opercule sur le corps.

### EXPOSÉ DE L'INVENTION

Un objet de la présente invention est de proposer un système d'emboîtement qui permet d'assurer que l'emboîtement de l'opercule sur le corps a été parfaitement réalisé.

À cet effet, est proposé un système d'emboîtement destiné à emboîter une première pièce sur une deuxième pièce, ledit système d'emboîtement comportant :
- une molette présentant un axe de révolution et destinée à venir en appui sur la deuxième pièce pour l'emboîter sur la première pièce,
- deux bras de levier montés mobiles en rotation autour d'un axe de rotation parallèle audit axe de révolution et désaxé par rapport audit axe de révolution, où ladite molette est montée mobile en rotation entre les deux bras de levier autour dudit axe de révolution,
- au moins un capteur d'effort fixé sur un élément du système d'emboîtement et arrangé pour émettre une valeur électrique proportionnelle à la déformation subie lorsque ladite une molette appuie sur la deuxième pièce, et
- une unité de contrôle connectée audit au moins un capteur d'effort et arrangée pour comparer la valeur électrique à un intervalle prédéfini de valeurs.

Selon un mode de réalisation particulier, le système d'emboîtement comporte :
- un arbre d'appui monté entre les deux bras de levier, et
- une paire de paliers disposés de part et d'autre de la molette, où chaque palier présente un cylindre proximal et un cylindre distal coaxiaux avec l'axe de révolution et liés l'un à l'autre par au moins une poutrelle, où le cylindre distal est emmanché fixe sur l'arbre d'appui, où le cylindre proximal est emmanché libre sur l'arbre d'appui et où la molette est emmanchée libre en rotation sur le cylindre proximal autour dudit axe de révolution, et
où ledit au moins un capteur d'effort est fixé sur au moins une des poutrelles et arrangé pour émettre une valeur électrique proportionnelle à la déformation de ladite au moins une poutrelle lorsque la molette appuie sur la deuxième pièce.

Avantageusement, chaque capteur d'effort est fixé sur une poutrelle au niveau d'une zone de ladite poutrelle qui présente une épaisseur réduite.

Selon un mode de réalisation particulier, ledit au moins un capteur d'effort est fixé sur au moins un des deux bras de levier et arrangé pour émettre une valeur électrique proportionnelle à la déformation dudit au moins un des deux bras de levier lorsque la molette appuie sur la deuxième pièce.

Avantageusement, chaque capteur d'effort est fixé sur un bras de levier au niveau d'une zone dudit bras de levier qui présente une épaisseur réduite.

L'invention propose également une machine de moulage comportant des moyens de moulage pour mouler une première pièce et une deuxième pièce et un système d'emboîtement selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en perspective d'un système d'emboîtement de l'état de la technique,
Fig. 2 est une vue en perspective d'un système d'emboîtement selon un premier mode de réalisation de l'invention,
Fig. 3 est une vue en perspective d'un système d'emboîtement selon un deuxième mode de réalisation de l'invention,
Fig. 4 est une vue en perspective d'un système d'emboîtement selon un troisième mode de réalisation de l'invention,
Fig. 5A est une vue en perspective et éclatée d'une partie du système d'emboîtement de la Fig. 2,
Fig. 5B montre une vue en perspective d'un palier mis en oeuvre dans le système d'emboîtement de la Fig. 2,
Fig. 6 est une vue en perspective d'une partie du système d'emboîtement de la Fig. 3, et
Fig. 7 est une vue en perspective d'une partie du système d'emboîtement de la Fig. 4.

### EXPOSÉ DÉTAILLÉ DE MODES DE RÉALISATION

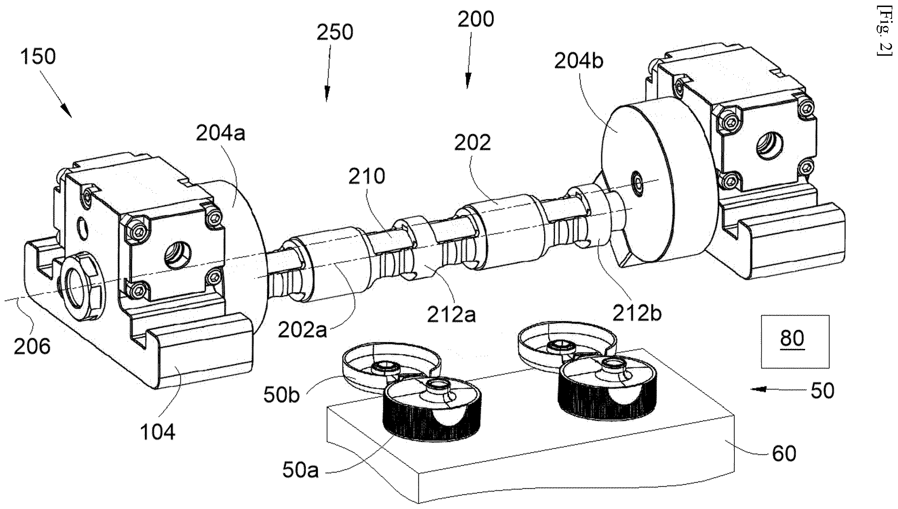

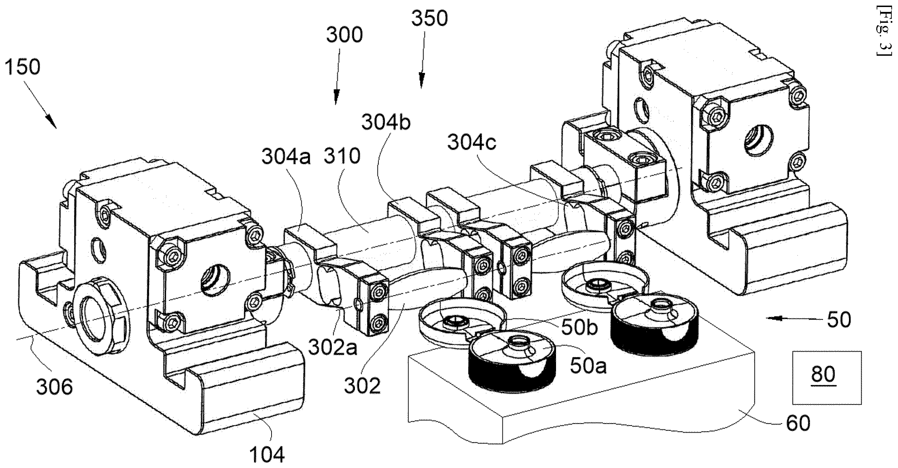

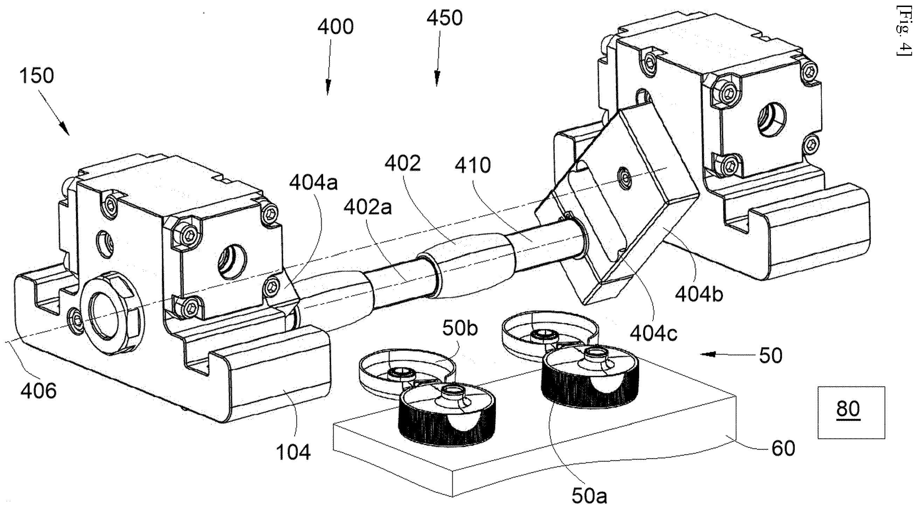

La Fig. 2 montre un système d'emboîtement 200 selon un premier mode de réalisation de l'invention, la Fig. 3 montre un système d'emboîtement 300 selon un deuxième mode de réalisation de l'invention et la Fig. 4 montre un système d'emboîtement 400 selon un troisième mode de réalisation de l'invention.

Chaque système d'emboîtement 200, 300, 400 peut être mis en oeuvre dans une machine de moulage 150 qui comporte des moyens de moulage dont au moins une mâchoire 60.

Les moyens de moulage comportent classiquement des mâchoires 60 qui sont conformées pour réaliser le moulage d'une première pièce 50a et d'une deuxième pièce 50b solidaire l'une de l'autre par une charnière moulée en même temps que les pièces 50a et 50b. Dans le mode de réalisation de l'invention présenté ici, la première pièce 50a est un corps 50a d'un capuchon 50 et la deuxième pièce 50b est un opercule 50b du même capuchon 50 articulé sur le corps 50a.

Chaque système d'emboîtement 200, 300, 400 peut prendre une forme similaire à celle du système d'emboîtement 100 de l'état de la technique décrit à partir de la Fig. 1.

Le système d'emboîtement 200, 300, 400 comporte ainsi deux chariots 104 entre lesquels est monté un module d'emboîtement 250, 350, 450. Comme pour l'état de la technique, les chariots 104 sont montés mobiles de manière à ce que le module d'emboîtement 250, 350, 450 déplace et emboîte la première pièce 50a sur la deuxième pièce 50b.

Par exemple, le système d'emboîtement 200, 300, 400 comporte deux rails de guidage parallèles et le long de chacun desquels un chariot 104 est monté mobile en translation par action d'un premier moyen d'entraînement, tel qu'un moteur avec une vis à billes. Les deux chariots 104 sont en face l'un de l'autre et se déplacent de manière synchronisée.

Le module d'emboîtement 250, 350, 450 comporte au moins une molette 202, 302, 402 présentant un axe de révolution 202a, 302a, 402a et destinée à déplacer la deuxième pièce 50b et à venir en appui sur la deuxième pièce 50b pour l'emboîter sur la première pièce 50a. Dans la suite de la description, il est fait mention d'une seule molette 202, 302, 402, mais elle peut s'appliquer à plusieurs molettes 202, 302, 402 qui sont alignées le long de l'axe de révolution 202a, 302a, 402a.

Le module d'emboîtement 250, 350, 450 comporte au moins deux bras de levier 204a-b, 304a-b, 404a-b qui sont montés mobiles en rotation autour d'un axe de rotation 206, 306, 406 qui est parallèle à l'axe de révolution 202a, 302a, 402a et désaxé par rapport à ce dernier. Pour un même module d'emboîtement 250, 350, 450, les axes de rotation 206, 306, 406 de tous les bras de levier 204a-b, 304a-b, 404a-b sont coaxiaux.

Dans chaque mode de réalisation, la ou chaque molette 202, 302, 402 est montée mobile en rotation entre les deux bras de levier 204a-b, 304a-b, 404a-b autour de l'axe de révolution 202a, 302a, 402a.

Dans le mode de réalisation de l'invention présenté à la Fig. 2, il y a deux bras de levier 204a-b et entre eux, il y a plusieurs molettes 202.

Dans le mode de réalisation de l'invention présenté à la Fig. 3, il y a deux paires de bras de levier 304a-b et il y a une molette 302 entre deux bras de levier 304a-b d'une même paire. Dans le mode de réalisation de l'invention présenté à la Fig. 4, il y a deux bras de levier 404a-b et entre eux, il y a plusieurs molettes 402.

Les bras de levier 204a-b, 304a-b, 404a-b sont montés mobiles en rotation entre les chariots 104 où à cet effet, au moins un est équipé d'un deuxième moyen d'entraînement, tel qu'un moteur, qui assure le déplacement en rotation des bras de levier 204a-b, 304a-b, 404a-b autour de l'axe de rotation 206, 306, 406 pour amener la molette 202, 302, 402 sous la deuxième pièce 50b, faire pivoter cette dernière et l'emboîter sur la première pièce 50a.

Dans le mode de réalisation de l'invention présenté à la Fig. 2, chaque bras de levier 204a-b prend la forme d'une roue coaxiale avec l'axe de rotation 206 et les molettes 202 sont emmanchées libres en rotation sur un arbre d'appui 210. L'arbre d'appui 210 est monté fixe sur les deux bras de levier 204a-b de manière coaxiale avec l'axe de révolution 202a. Chaque roue est alors entraînée en rotation par un deuxième moyen d'entraînement.

Dans le mode de réalisation de l'invention présenté à la Fig. 3, chaque bras de levier 304a-b prend la forme d'une poutre dont une extrémité proximale est montée fixe sur un arbre de rotation 310 monté entre les deux chariots 104 de manière coaxiale avec l'axe de rotation 306 et dont une extrémité distale porte la molette 302. Chaque molette 302 est ainsi montée entre deux extrémités distales de deux bras de levier 304a-b. L'arbre de rotation 310 est alors entraîné en rotation par un deuxième moyen d'entraînement.

Dans le mode de réalisation de l'invention présenté à la Fig. 4, il y a deux bras de levier 404a-b et chacun prend la forme d'une poutre dont une extrémité proximale est montée mobile en rotation sur un chariot 104 de manière coaxiale avec l'axe de rotation 406 et dont une extrémité distale porte un arbre d'appui 410 coaxial avec l'axe de révolution 202a et qui porte la ou chaque molette 402. Chaque extrémité proximale est alors entraînée en rotation par un deuxième moyen d'entraînement.

Le module d'emboîtement 250, 350, 450 comporte également au moins un capteur d'effort 208, 308, 408, typiquement une jauge de déformation exploitée par un pont de Wheatstone, fixé sur un élément du système d'emboîtement 200, 300, 400, et plus spécifiquement du module d'emboîtement 250, 350, 450, et arrangé pour mesurer la déformation de l'élément lorsqu'une molette 202, 302, 402 appuie sur la deuxième pièce 50b. Ainsi, lorsqu'une molette 202, 302, 402 appuie sur la deuxième pièce 50b, la force ainsi générée se transfert jusqu'au chariot 104 et en positionnant au moins un capteur d'effort 208, 308, 408 le long de ce chemin de transfert, ce capteur d'effort 208, 308, 408 se déforme et sa déformation est proportionnelle à la force exercée sur la deuxième pièce 50b.

Chaque capteur 208, 308, 408 émet une valeur électrique proportionnelle à la déformation subie lorsqu'une molette 202, 302, 402 appuie sur la deuxième pièce 50b et en recueillant chaque valeur électrique sur plusieurs cycles d'emboîtement, une unité de contrôle 80 peut savoir si les emboîtements se font toujours de manière correcte ou non. Dans ce dernier cas, un réglage du système d'emboîtement 200, 300, 400 peut être nécessaire.

Le recueil des valeurs électriques s'effectue par l'unité de contrôle 80 connectée à chaque capteur d'effort 208, 308, 408.

L'unité de contrôle 80 est ainsi arrangée pour enregistrer les valeurs électriques reçues de chaque capteur d'effort 208, 308, 408 et pour comparer ces valeurs électriques à un intervalle prédéfini de valeurs correspondant à un emboîtement correct des deux pièces 50a-b.

L'unité de contrôle 80 peut également être arrangée pour envoyer un signal d'alerte en cas de détection d'une anomalie, c'est-à-dire lorsqu'une valeur électrique est hors de l'intervalle prédéfini de valeurs.

Avec un tel arrangement, il est aisé de surveiller automatiquement que les emboîtements s'effectuent de manière correcte.

Comme décrit ci-dessus, dans le mode de réalisation de la Fig. 2, le système d'emboîtement 200 comporte l'arbre d'appui 210 monté entre les deux bras de levier 204a-b et il est fixé à chacun d'eux.

Le système d'emboîtement 200 comporte également, pour chaque molette 202, une paire de paliers 212a-b, où les paliers 212a-b sont disposés de part et d'autre de la molette 202. Chaque molette 202 et chaque palier 212a-b sont enfilés sur l'arbre d'appui 210.

Dans le cas de la Fig. 2, il y a deux molettes 202, un palier double 212a et deux paliers simples 212b. Le palier double 212a est disposé entre les deux molettes 202 et coopère avec chacune d'elles et chaque palier simple 212b coopère avec une seule molette 202. Bien sûr, en fonction du nombre de molettes 202, le nombre de paliers 212a-b varie. De la même manière, le palier double 212a peut être remplacé par deux paliers simples.

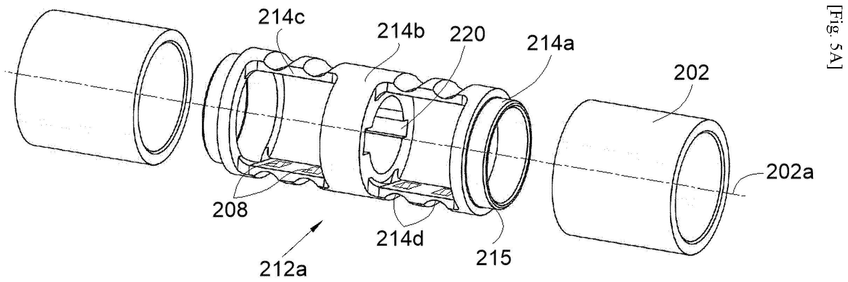

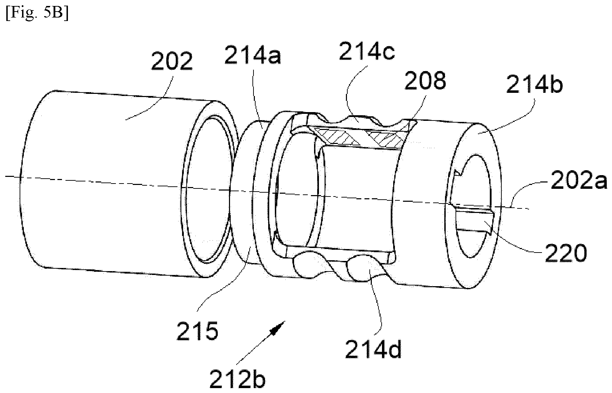

La Fig. 5A montre le palier double 212a et la Fig. 5B montre un palier simple 212b.

Chaque palier 212a-b présente un cylindre proximal 214a et un cylindre distal 214b, dans le cas du palier double 212a, il y a deux cylindres proximaux 214a de part et d'autre du cylindre distal 214b qui est ici au milieu.

Les cylindres 214a-b sont coaxiaux avec l'axe de révolution 202a et ils sont liés l'un à l'autre par au moins une poutrelle 214c, ici deux. Chaque poutrelle 214c est globalement parallèle à l'axe de révolution 202a.

Le cylindre distal 214b est emmanché fixe sur l'arbre d'appui 210, c'est-à-dire que l'ajustement est suffisamment serré pour que les efforts que le cylindre distal 214b subit se transmettent à l'arbre d'appui 210. Dans le mode de réalisation de l'invention présenté ici, la solidarisation entre le cylindre distal 214b et l'arbre d'appui 210 est complétée par des clavettes glissées dans des rainures 220 du cylindre distal 214b et de l'arbre d'appui 210 pour empêcher la rotation de l'un par rapport à l'autre.

Le cylindre proximal 214a est emmanché libre sur l'arbre d'appui 210, c'est-à-dire que l'ajustement est suffisamment lâche pour que les efforts que le cylindre proximal 214a subit lors d'un emboîtement, ne se transmettent pas à l'arbre d'appui 210, il y a ainsi toujours un espace entre eux.

La molette 202 est emmanchée libre en rotation sur le cylindre proximal 214a autour de l'axe de révolution 202a. Comme pour le cylindre proximal 214a, la molette 202 est toujours à distance de l'arbre d'appui 210.

Ici, le cylindre proximal 214a présente un fût 215 dont le diamètre extérieur est inférieur au diamètre intérieur de la molette 202 et cette dernière est enfilée sur ce fût 215. La molette 202 est ainsi enfilée à chaque extrémité sur un fût 215. Le diamètre intérieur du fût 215 est suffisamment grand pour éviter les contacts avec l'arbre d'appui 210 lors d'un emboîtement.

Dans le mode de réalisation de l'invention présenté ici, les capteurs d'effort 208, ici au nombre de deux, sont fixés sur au moins une des poutrelles 214c.

Dans le mode de réalisation présenté ici, il y a deux capteurs d'effort 208, sur une poutrelle 214c, mais il peut y en avoir au moins un, et chaque poutrelle 214c peut en être équipée. Plus le nombre de capteurs d'effort 208 est important, plus le nombre de valeurs électriques fournies est important et permet une bonne connaissance sur l'emboîtement mais plus la gestion des valeurs électriques devient lourde.

Chaque capteur d'effort 208 est ainsi arrangé pour émettre une valeur électrique proportionnelle à la déformation de la poutrelle 214c où il est fixé, lorsque la molette 202 appuie sur la deuxième pièce 50b.

Dans le mode de réalisation de l'invention présenté à la Fig. 2, la poutrelle 214c équipée de capteurs d'effort 208 constitue l'élément du système d'emboîtement 200 dont la déformation est surveillée.

Ainsi, lorsque la molette 202 appuie sur la deuxième pièce 50b, la molette 202 se déplace radialement par rapport à l'arbre d'appui 210, ce qui entraîne un déplacement similaire de chaque cylindre proximal 214a de part et d'autre de la molette 202 et donc une déformation des poutrelles 214c correspondantes, ce qui déforme les capteurs d'effort 208 associés.

Pour augmenter la déformation du capteur d'effort 208, chacun est fixé sur une poutrelle 214c au niveau d'une zone 214d de la poutrelle 214c qui présente une épaisseur réduite. À cette fin, la poutrelle 214c est creusée au niveau de chaque capteur d'effort 208.

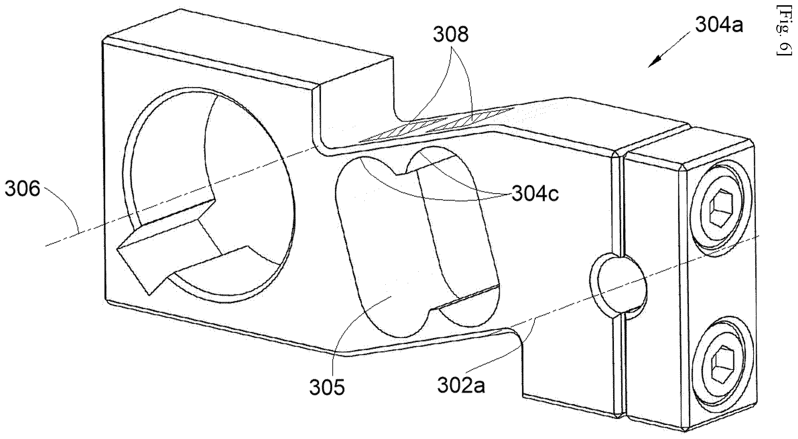

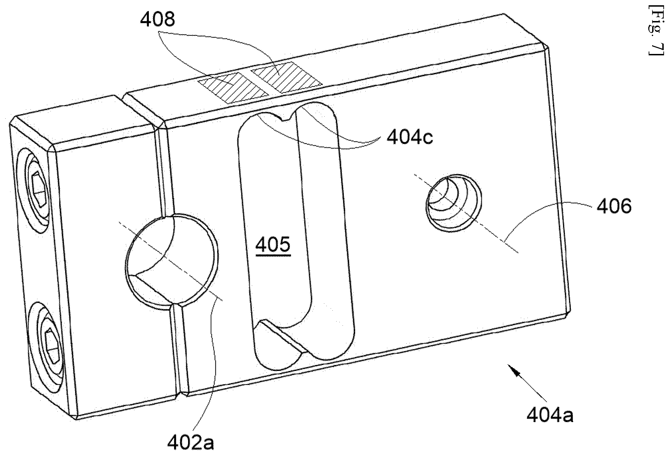

Dans les modes de réalisation des Figs. 3 et 4, les capteurs d'effort 308, 408 sont fixés sur les deux bras de levier 304a-b, 404a-b et les Figs. 6 et 7 montrent des exemples de ces bras de levier 304a, 404a.

Chaque capteur d'effort 308, 408 est ainsi arrangé pour émettre une valeur électrique proportionnelle à la déformation du bras de levier 304a-b, 404a-b lorsque la molette 302, 402 appuie sur la deuxième pièce 50b. Comme précédemment, le nombre de capteurs d'effort 308, 408 peut être adapté.

Dans ces modes de réalisation, les bras de levier 304a-b, 404a-b équipés de capteurs d'effort 208 constituent les éléments du système d'emboîtement 300, 400 dont la déformation est surveillée.

Ainsi, lorsque la molette 302, 402 appuie sur la deuxième pièce 50b, la molette 302, 402 force sur le bras de levier 304a-b, 404a-b, ce qui le déforme et entraîne une déformation des capteurs d'effort 208 associés.

Pour augmenter la déformation du capteur d'effort 308, 408, chacun est fixé sur un bras de levier 304a-b, 404a-b au niveau d'une zone 304c, 404c du bras de levier 304a-b, 404a-b qui présente une épaisseur réduite. Ici, l'épaisseur réduite est obtenue par la réalisation d'un évidement 305, 405 traversant le bras de levier 304a-b, 404a-b parallèlement à l'axe de révolution 302a, 402 entre ce dernier et l'axe de rotation 206, 306. Le capteur d'effort 308, 408 est fixé sur un bord de cet évidement 305, 405.

D'une manière générale, les capteurs d'effort 208, 308, 408 sont fixés sur des surfaces (poutrelles 214c, bras de levier 304a-b, 404a-b) qui sont orthogonales à l'effort subi afin qu'elles soient pliées sur leurs épaisseurs.

Selon un mode de réalisation particulier, l'unité de contrôle 80 comporte, reliés par un bus de communication: un processeur ou CPU (« Central Processing Unit » en anglais) ; une mémoire vive RAM (« Read Access Memory » en anglais) ; une mémoire morte, par exemple de type ROM (« Read Only Memory » en anglais) ou EEPROM (« Electrically-Erasable Programmable ROM » en anglais) ou de type Flash ; une unité de stockage, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces I/f.

Le gestionnaire d'interfaces I/f permet à l'unité de contrôle 80 de communiquer avec, entre autres, les capteurs d'effort 208, 308, 408.

Le processeur est capable d'exécuter des instructions chargées dans la mémoire vive à partir de la mémoire morte, d'une mémoire externe, d'un support de stockage (tel qu'une carte SD), ou d'un réseau de communication. Lorsque la plateforme matérielle est mise sous tension, le processeur est capable de lire de la mémoire vive des instructions et de les exécuter. Ces instructions forment un programme d'ordinateur causant l'implémentation, par le processeur, de tout ou partie des étapes et fonctionnements décrits ici.

Tout ou partie des étapes et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Spécifie Integrated Circuit » en anglais). D'une manière générale, l'unité de contrôle 80 comporte de la circuiterie électronique adaptée et configurée pour implémenter les fonctionnements et étapes décrits ici.

## Revendications

1. Système d'emboîtement (200, 300, 400) destiné à emboîter une première pièce (50a) sur une deuxième pièce (50b), ledit système d'emboîtement (200, 300, 400) comportant :
- une molette (202, 302, 402) présentant un axe de révolution (202a, 302a, 402a) et destinée à venir en appui sur la deuxième pièce (50b) pour l'emboîter sur la première pièce (50a),
- deux bras de levier (204a-b, 304a-b, 404a-b) montés mobiles en rotation autour d'un axe de rotation (206, 306, 406) parallèle audit axe de révolution (202a, 302a, 402a) et désaxé par rapport audit axe de révolution (202a, 302a, 402a), où ladite molette (202, 302, 402) est montée mobile en rotation entre les deux bras de levier (204a-b, 304a-b, 404a-b) autour dudit axe de révolution (202a, 302a, 402a),
- au moins un capteur d'effort (208, 308, 408) fixé sur un élément du système d'emboîtement (200, 300, 400) et arrangé pour émettre une valeur électrique proportionnelle à la déformation subie lorsque ladite molette (202, 302, 402) appuie sur la deuxième pièce (50b), et
- une unité de contrôle (80) connectée audit au moins un capteur d'effort (208, 308, 408) et arrangée pour comparer la valeur électrique à un intervalle prédéfini de valeurs.

2. Système d'emboîtement (200) selon la revendication 1, **caractérisé en ce qu'**il comporte :
- un arbre d'appui (210) monté entre les deux bras de levier (204a-b), et
- une paire de paliers (212a-b) disposés de part et d'autre de la molette (202), où chaque palier (212a-b) présente un cylindre proximal (214a) et un cylindre distal (214b) coaxiaux avec l'axe de révolution (202a) et liés l'un à l'autre par au moins une poutrelle (214c), où le cylindre distal (214b) est emmanché fixe sur l'arbre d'appui (210), où le cylindre proximal (214a) est emmanché libre sur l'arbre d'appui (210), et où la molette (202) est emmanchée libre en rotation sur le cylindre proximal (214a) autour dudit axe de révolution (202a), et
où ledit au moins un capteur d'effort (208) est fixé sur au moins une des poutrelles (214c) et arrangé pour émettre une valeur électrique proportionnelle à la déformation de ladite au moins une poutrelle (214c) lorsque la molette (202) appuie sur la deuxième pièce (50b).

3. Système d'emboîtement (200) selon la revendication 2, **caractérisé en ce que** chaque capteur d'effort (208) est fixé sur une poutrelle (214c) au niveau d'une zone (214d) de ladite poutrelle (214c) qui présente une épaisseur réduite.

4. Système d'emboîtement (300, 400) selon la revendication 1, **caractérisé en ce que** ledit au moins un capteur d'effort (308, 408) est fixé sur au moins un des deux bras de levier (304a-b, 404a-b) et arrangé pour émettre une valeur électrique proportionnelle à la déformation dudit au moins un des deux bras de levier (304a-b, 404a-b) lorsque la molette (302, 402) appuie sur la deuxième pièce (50b).

5. Système d'emboîtement (300, 400) selon la revendication 4, **caractérisé en ce que** chaque capteur d'effort (308, 408) est fixé sur un bras de levier (304a-b, 404a-b) au niveau d'une zone (304c, 404c) dudit bras de levier (304a-b, 404a-b) qui présente une épaisseur réduite.

6. Machine de moulage (150) comportant des moyens de moulage (60) pour mouler une première pièce (50a) et une deuxième pièce (50b) et un système d'emboîtement (200, 300, 400) selon l'une des revendications 1 à 5.
